(19) Europäisches Patentamt
European Patent Office
Office européen des brevets

(11) Publication number: 0 499 857 B1

# (12) EUROPEAN PATENT SPECIFICATION

(45) Date of publication of patent specification: **18.01.95**

(51) Int. Cl.$^6$: **C09D 11/10**, D06P 1/52, D06P 1/651, D06P 1/645, D21H 19/62, B41M 5/00

(21) Application number: **92101578.0**

(22) Date of filing: **31.01.92**

## (54) Binder and vehicle for inks and other color formulations.

(30) Priority: **13.02.91 US 654849**
**30.09.91 US 768790**

(43) Date of publication of application:
**26.08.92 Bulletin 92/35**

(45) Publication of the grant of the patent:
**18.01.95 Bulletin 95/03**

(84) Designated Contracting States:
**BE CH DE FR GB LI SE**

(56) References cited:
**EP-A- 0 030 786**
**FR-A- 2 388 870**
**GB-A- 1 410 172**
**US-A- 4 336 026**

(73) Proprietor: **MILES INC.**
**One Mellon Center**
**500 Grant St.**
**Pittsburgh, PA 15219-2502 (US)**

(72) Inventor: **Byrt, Brian P.**
**1169 Greentree Rd.**
**Pittsburgh, PA 15220 (US)**

(74) Representative: **Zobel, Manfred, Dr. et al**
**BAYER AG**
**Konzernverwaltung RP**
**Patente Konzern**
**D-51368 Leverkusen (DE)**

EP 0 499 857 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to compositions useful as binders for dyes and pigments used in dyeing or printing, as well as to paper or textile color formulations and printing inks containing such compositions.

The paper industry uses several different binders, also known as fixatives or retention aids, for binding dyes and pigments to paper or textile products, particularly those made of cellulose-based materials. For example, particularly effective binders for binding anionic dyes to cellulosics include polyalkylene polyamines or polyalkylene imines, especially polyethylenimine. When polyamines are used to pretreat cellulosic materials before dyeing with anionic dyes, it is believed that the polyamines are capable of binding with the dyes even though already bound in some way to the cellulosic fibers. Although dyes prepared using such binders are bound tightly to paper or textiles, bleeding of these dyes can occur, especially under alkaline conditions. In addition, such binders are typically added to the paper before the dye or ink is applied or after the dye or ink is applied rather than being used as part of the ink itself.

U.S. Patent 3,864,296 discloses an aqueous low-viscosity printing fluid for high-speed printing containing a water-soluble dye and a compatible water-soluble cationic thermosetting resin. These resins form hard insoluble products by undergoing crosslinking reactions that involve both the resins and the dye molecules. A disadvantage of such printing fluids, however, is a relatively slow development of fastness properties, with cure times being as long as 24 to 72 hours or even longer.

Polyalkylenimines (including polyethylenimine) or derivatives thereof are well known in the printing industry, although various reaction-modified polyalkylene imines rather than the unreacted polyalkylene imines themselves are generally used with paper dyes and printing inks. Modified polyalkylene imines include condensation products of carboxylic acids, cyanamides, guanidines, and the like; alkylated or hydroxyethylated derivatives; and various other derivatives. Few references, however, disclose the use of polyalkylene imines that have not been derivatized or otherwise modified.

The previously reported polyalkylene imine fixing agents can be applied before or after the ink is applied. For example, U.S. Patent 3,619,356 exemplifies using an anionic dye before applying a polyamine and indicates that it also is possible to use a polyamine before the dye is applied. Similarly, U.S. Patent 3,787,173 discloses a process for coloring cellulose textile materials by pretreatment of the textile material with polyethylenimine and subsequent treatment with a dye. This reference also does not mention using a single mixture containing both the dye and polyethylenimine. U.S. Patent 4,226,749 discloses a composition for coating paper containing kaolin, an acrylate copolymer, a polyethylenimine of molecular weight 4000 to 6000, a styrene-butadiene binder, aluminum stearate, and a sizing compound. The paper would subsequently be inked. The polyethylenimine is described as being a counter ion for the acrylate carboxylic acid groups. None of these references, however, mentions using a single mixture containing both a dye and a polyamine.

U.S. Patent 4,020,215 discloses coating a paper substrate first with a polyalkylene imine and then with a polymer that contains groups that react with imino groups of the polyalkylene imine. Inks are not mentioned, the reference being directed toward a laminate coating process.

U.S. Patent 4,619,665 claims the use of polyethylenimine as a blocking agent for use with transfer sheets, which contain dyes that are transferred upon heating to a material placed in contact with the transfer sheet. Polyethylenimine is deposited on portions of the transfer sheet that are not intended to transfer dye to the material. When the transfer sheet is heated to volatilize the dye, the polyethylenimine reacts with the dye and thereby prevents the dye from volatilizing from selected areas. Corresponding areas of the material are thus not dyed. Premixing a dye with polyethylenimine is not within the scope of this process.

U.S. Patent 4,167,392 claims a transfer printing process that discloses polyethylenimines as one of a broad class of amines that enhance the dyeing process. In contrast to U.S. Patent 4,619,665, discussed above, the amine is used to pretreat the substrate onto which the dye is to be transferred upon heating. That is, the amine is deposited on portions of the substrate that is to receive dye. Once again, however, premixing a dye with polyethylenimine is not within the scope of this process.

U.S. Patent 4,154,618 discloses a resinous coating composition comprising an acidic resin that is complexed by a complexing agent, the complexing agent (which consists of a coordinating metal selected from zinc, zirconium, cobalt, and nickel, a polyalkylene polyamine, and a carboxylic acid modifier), and ammonia. The polyamine is present only a complex with the metal. The reference also discloses printing inks containing these components in combination with a pigment. The reference does not disclose alkanolamines.

U.S. Patent 4,299,630 discloses an aqueous jet printing ink containing a specific dye (i.e., C.I. solubilized Sulfur Black), a polyethylenimine having a molecular weight of about 300 to 10,000, water, and a buffer to maintain a pH above about 8.5. The ink may optionally contain diethylene glycol monobutyl ether

to enhance penetration of the paper and may also contain an alkylene glycol (or alkyl ether thereof) as a humectant. The patent does not disclose the use of alkanolamines.

Alkanolamines, alkylene glycols, glycerin, and combinations thereof are also known for use in inks. However, the use of alkanolamines and glycols in conjunction with polyalkylene imines such as used in the present invention has not been reported.

Alkanolamines are generally described only as bases (or occasionally as a complexing agent) to help solubilize acidic dyes. E.g., U.S. Patents 4,617,381, 4,617,380, 4,336,026, 4,071,312, and 3,894,836.

U.S. Patent 4,108,812 discloses the use of ethylene glycol and triethanolamine with a cationic fixing agent prepared by crosslinking polyamide amines with certain bifunctional alkylating agents containing quaternary ammonium groups. The reference does not mention polyalkylene imines.

U.S. Patent 3,903,034 discloses a jet printing ink for preparing offset masters containing a direct dye, a specific type of styrene-maleic anhydride resin, and a glycol plasticizer. A lower alkanolamine can optionally be added as a base to control pH. Polyalkylene imines are not mentioned.

U.S. Patent 4,417,898 discloses a process for dyeing cellulosic materials by applying an aqueous dyeing liquor containing an alkanolamine, fixing using "known methods", and after-treating the dyed substrate. The fixing agents for the second step include reaction products of polyamines but not unreacted polyalkylene imines and are, in any case, added only after treatment with the dye and alkanolamine.

U.S. Patent 3,846,141 discloses an aqueous ink composition containing a water-soluble direct dye and a humectant system containing a mixture of various glycols, including polyalkylene glycols. The glycols can include ethers of diethylene glycol, but use of diethylene glycol itself is not described. The ink may optionally contain a lower alkanolamine as a base to control pH. The reference does not mention polyalkylene imines.

Despite the affinity of the polyalkylene imines for dyes and pigments, it has surprisingly been found that the binder compositions of the present invention, when premixed with a dye or pigment, are sufficiently bound to papers and fabrics to confer exceptional bleed resistance, generally within only a few seconds of application.

## SUMMARY OF THE INVENTION

This invention relates to compositions useful as binders in paper or textile color formulations or printing inks comprising

(a) one or more polyalkylene imines (preferably a polyethylenimine);
(b) one or more alkanolamines (preferably ethanolamine); and
(c) one or more polyols (preferably a glycol);

optionally in the presence of

(d) water.

This invention further relates to paper or textile color formulations or printing inks having improved resistance to bleeding and feathering in which about 5 to about 40 percent by weight of the binder compositions of the invention are used in combination with about 1 to about 60 percent by weight of a dye and/or pigment, up to 94 percent by weight water, and, optionally, additives normally used with paper or textile color formulations or printing inks, the amount of the components, of course, totaling 100 percent by weight.

## DETAILED DESCRIPTION OF THE INVENTION

Suitable polyalkylene imines are preferably polyethylenimines, which can be either linear or branched. In aqueous solution with a dye, polyethylenimines function as cationic polyelectrolyte having a strong affinity for both the dye molecules and the cellulosic substrate. Examples of suitable polyethylenimines include compounds of the formula

$$R^a\text{-}(CH_2CH_2\text{-}NR^c)_m\text{-}R^b$$

wherein $R^a$ and $R^b$ are independently hydrogen, alkyl, $NH_2$, aminoalkyl, or alkylamino; $R^c$ is hydrogen, alkyl, or $-(CH_2CH_2\text{-}NH)_n\text{-}R^d$, wherein $R^d$ is hydrogen, alkyl, $NH_2$, aminoalkyl, or alkylamino; and m and n are independently integers greater than 1 and are preferably selected such that the molecular weight of the polyethylenimines is up to about 1,000,000 (preferably about 30,000 to about 100,000). The preferred polyethylenimines have terminal $NH_2$ groups. Branched polyethylenimines, which are believed to have a generally more spherical shape than linear polyethylenimines, are preferred. Suitable polyethylenimines are

commercially available from BASF, Hoechst Celanese, and Bayer AG. Mixtures of polyalkylene imines are, of course, also suitable.

Suitable alkanolamines are preferably aliphatic alkanolamines of the formula

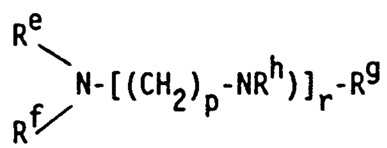

wherein at least one of $R^e$, $R^f$, $R^g$, and $R^h$ is hydroxyalkyl or hydroxyalkoxyalkyl and the others of $R^e$, $R^f$, $R^g$, and $R^h$ are independently hydrogen, alkyl, hydroxyalkyl, or hydroxyalkoxyalkyl; p is from 2 to 4 (preferably 2 or 3); and r is from 0 to 3 (preferably 0 or 1). Cf. U.S. Patent 4,417,898. Preferred alkanolamines include mono-, di-, or triethanolamine, diethylethanolamine, propanolamine, isopropanolamine, triisopropanolamine, diglycolamine, N-($\beta$-hydroxyethyl)ethylenediamine, or a mixture thereof. A particularly preferred alkanolamine is ethanolamine.

Suitable polyol surfactants or lubricants are compounds, preferably aliphatic compounds, having two or more hydroxyl substituents and are more preferably aliphatic glycols (in which the hydroxyl groups are located on adjacent carbon atoms). Preferred glycols include alkylene glycols, such as ethylene glycol and propylene glycol; polyalkylene glycols, such as polyethylene glycols (e.g., diethylene glycol, triethylene glycol, and higher polymers) and polypropylene glycols; and glycerin. Particularly preferred glycols include propylene glycol, polyethylene glycols, and glycerin, most preferably as a mixture.

The binder compositions of the invention are prepared by mixing the components, preferably using relatively small amounts of water to obtain concentrates. The preferred binder compositions comprise (a) about 10 to about 30 parts by weight of one or more polyalkylene imines (preferably a polyethylenimine); (b) about 20 to about 40 parts by weight of one or more alkanolamines; and (c) about 10 to about 60 parts by weight of one or more polyols (preferably glycols) as a surfactant and/or lubricant; in the presence of (d) up to about 40 parts by weight of water. Particularly preferred binder compositions contain 15 to 20 parts by weight of a polyethylenimine, 30 to 35 parts by weight of ethanolamine, and 10 to 60 parts by weight of one or more aliphatic glycols in up to 10 parts by weight of water. It is, of course, possible to prepare binder compositions containing substantially no water. It should also be noted that addition of an alcohol, such as methanol or ethanol, can give improved performance but is not preferred because of environmental and health considerations.

When used to prepare paper or textile color formulations or printing inks according to the invention, the binder compositions of the invention are mixed with suitable dyes or pigments to impart improved resistance to bleeding and feathering. In general, about 5 to about 40 percent by weight of the binder compositions are used in combination with about 1 to about 60 percent by weight of a suitable dye or pigment, up to 94 percent by weight water, and, optionally, additives normally used with color formulations and printing inks. Specific amounts of each component are, of course, dependent on the dye or pigment selected, the ultimate use as a color formulation or printing ink, the shade or depth desire, and on the equipment used. In general, pigments require less binder than dyes. Although about 10 to about 30 percent by weight of the binder and about 1 to about 40 percent by weight of the dye or pigment are generally preferred, one skilled in the art could readily determine the precise compositions that give optimal results for each composition and substrate. It is, of course, possible to omit substantially all of the water from the color formulations or printing inks or even to include instead additional non-aqueous (such as alcohol- or oil-based) components.

As used herein, the term "color formulation" refers to compositions used for mass coverage, whereas the term "printing ink" refers to compositions used for discrete characters and figures. It is possible, of course, to use color formulations of the invention for certain printing applications and to use printing inks for certain mass coverage applications.

Suitable dyes for the preparation of paper or textile color formulations include any of the usual dyes used for that purpose. Preferred dyes for preparing paper color formulations include direct dyes, such as Direct Red 236, Direct Orange 102, Direct Yellow 127, and Direct Blue 199. Acid dyes and reactive dyes are also suitable for preparing paper color formulations but are generally less preferred. Preferred dyes for preparing textile color formulations include reactive dyes, such as Reactive Yellow 25 and 111, Reactive Red 40, 148, and 159, and Reactive Blue 224, and acid dyes, such as Acid Black 172, as well as the direct dyes preferably used for paper dyes. Suitable pigments for the preparation of paper or textile color

formulation include any of the usual pigments used for that purpose. Preferred pigments include Pigment Orange 72 and 33, Pigment Yellow 14, 83, and 150, Pigment Blue 15, and Pigment Violet 19. Other dyes and pigments, as well as mixtures thereof, may, of course, also be used. Suitable substrates for dyeing with such paper or textile color formulations include cellulose-based materials, such as paper (especially tissue paper, paper towels, paper napkins, and check paper) and cotton; polyamides, such as nylon 6 or 66; polyesters; and acrylics.

Suitable dyes for the preparation of printing inks include any of the usual dyes used for that purpose. Preferred dyes for preparing printing inks include direct dyes, such as Direct Red 236, Direct Orange 102, Direct Yellow 127, and Direct Blue 199. Acid dyes, such as Acid Black 172, and reactive dyes, such as Reactive Yellow 25 and 111, Reactive Red 40, 148, and 159, and Reactive Blue 224, are also suitable. Suitable pigments for the preparation of printing inks include any of the usual pigments used for that purpose. Preferred pigments include Pigment Orange 72 and 33, Pigment Yellow 14, 83, and 150, Pigment Blue 15, and Pigment Violet 19. Other dyes and pigments, as well as mixtures thereof, may, of course, also be used. Suitable substrates for printing with such inks are preferably fibrous or other porous materials such as the cellulose-based materials, polyamides, polyesters, and acrylics described above with respect to paper and textile dyes. Non-porous substrates, such as metal surfaces or plastic films, are suitable but are less preferred.

The optional additives used in preparing paper or textile color formulations or printing inks include any of the additives normally used with such compositions, for example, waxes, surface-active agents, thickeners, and dye stabilizers (such as urea or additional quantities of alkanolamines). Other additives may, of course, also be used.

Dyeing and printing methods and equipment with which the paper and textile dyes and printing inks of the invention can be used include any of the known methods and equipment. For example, the paper and textile color formulations may be applied by spraying, by dipping in a bath and passing through a nip such as a size press, or by stock or vat dyeing. Printing inks can be applied, for example, using flexo presses or gravure presses. It is, of course, possible to apply printing inks to broad areas of substrate by using mass application techniques.

Paper dyes and printing inks prepared using the binders of the invention have been found to be exceptionally resistant to bleeding and feathering, as determined by any of several methods known in the art. In addition, many of the paper and textile color formulations and printing inks of the invention are exceptionally stable with respect to precipitation and separation.

The following examples further illustrate details for the preparation and use of the compositions of this invention. The invention, which is set forth in the foregoing disclosure, is not to be limited by these examples. Those skilled in the art will readily understand that known variations of the conditions and processes of the following preparative procedures can be used to prepare these compositions. Unless otherwise noted, all temperatures are degrees Celsius and all parts and percentages are parts by weight and percentages by weight, respectively.

## EXAMPLES

Binders having the following compositions according to the invention were used in the Examples:

Binder (I) A mixture of 17 parts by weight of CORCAT®P 600 (a polyethylenimine having a molecular weight of about 60,000, available from Hoechst Celanese), 30 parts by weight of ethanolamine, 12 parts by weight of glycerin, and 41 parts by weight of water.

Binder (II) A mixture of 17 parts by weight (15.5 wt.%) of CORCAT®P 600, 35 parts by weight (32 wt.%) of ethanolamine, 28 parts by weight (25.5 wt.%) of glycerin, and 30 parts by weight (27 wt.%) of propylene glycol. No water was added.

Printing inks were prepared by mixing each binder with suitable dyes and pigments in water using the proportions indicated in each Example. The physical stability of each printing ink used in Examples 1-5 was determined using precipitation and separation tests. Resistance to bleed and feathering was determined using padded samples and printed samples. The bleed and feathering tests used greater quantities of applied ink than is generally used in commercial printing presses and are thus typically more rigorous tests.

When used alone, CORCAT®P 600 polyethylenimine caused immediate precipitation of the following anionic dyes and pigments used in the examples: C.I. Pigment Violet 19 (cf. Example 2), C.I. Direct Red 236 (cf. Example 4), and C.I. Direct Yellow 127 (cf. Example 5).

Precipitation and separation tests. The printing inks were tested for resistance to precipitation and separation by the following methods.

As used herein, the term "precipitation" refers to an essentially irreversible process that can occur with either a dye or pigment. The term "separation" refers to a reversible settling out of pigment. Separation of inks based on pigment dispersions is expected (e.g., Examples 2 and 3). The separated pigment can be restored to a suspended form by shaking or stirring.

Method P1. The inks were allowed to stand in an uncovered vessel at room temperature and observed for precipitation and separation for 7 days. (Evaporation of ethanolamine can affect results.)

Method P2. Method P1 was repeated using a closed bottle at about 60°C (140°F).

Method P3. The inks were mixed for two hours in a variable speed mixer having a three-blade propeller and observed for precipitation and separation.

Method P4. The inks were homogenized for 4 hours in a Gifford wood homogenizer and observed for precipitation and separation.

Method P5. The inks were agitated for 24 hours in an attritor fully loaded with stainless steel shot and observed for precipitation and separation.

Precipitation and separation results are subjective evaluations obtained by a skilled observer and are reported as none, very slight ("v. sl."), slight, moderate, and extensive.

Bleed tests. The printing inks were tested for resistance to bleed by the following methods.

Method B1. Each ink was padded on white paper towels at 0.87 KPa (60 psi). As soon as the ink was dry to the touch, the inked substrate was cut into several 2.5-cm x 2.5-cm squares. Half of the inked squares were set aside for testing by Method B2. The remaining squares were immersed in water, lard oil, 1:1 water-ethanol, an 0.5% solution of soap (Ivory Liquid) in water, and milk (listed in an approximately increasing order of test severity). The inked substrate was then placed between sheets of filter paper (Whatman No. 4), covered with a 2.27 Kg (5 lb) weight, and observed for bleed.

Method B2. Sample squares prepared for testing by Method B1 were allowed to dry for 24 hours. The inked squares were tested as described for Method B1 and observed for bleed. This test is less stringent than Method B1 and represents conditions needed to prevent or retard bleed in inks prepared without the binders of the invention.

Method B3. The inks were printed on the substrate using a hand proofer or a felt-tipped marking pen. Each sample was tested as in Method B1.

Method B4. The inks were padded on wrapping tissue using an off machine padder. Each mechanically padded sample was tested as in Method B1.

Method B5. The inks were printed on white paper towels using a Kidder flexo press. Each printed sample was tested as in Method B1.

Bleed test results are subjective evaluations obtained by a skilled observer and are reported as none (no staining is observed in the filter paper), very slight ("v. sl."), slight, moderate, and extensive (the color of filter paper approaches that of the tested substrate). This evaluation scale is similar to that used for the AATCC evaluation method for staining.

Feathering test. The printing inks were tested for resistance to feathering by the following methods.

Method F1. The inks were printed on the substrate using a hand proofer and a felt-tipped marking pen. The printed samples were observed for feathering.

Method F2. The inks were printed on white paper towels using a Kidder flexo press. The printed samples were observed for feathering.

Feathering test results are subjective evaluations obtained by a skilled observer and are reported as good (essentially no expansion of formulations beyond the site of application) or poor (easily observed expansion beyond the site of application).

Examples 1-5 Laboratory application.

Example 1 Printing ink based on C.I. Direct Blue 199.

A printing ink was prepared by mixing the quantities of binders indicated in Table I with 10 g of Direct Blue 199 Liquid and 90 ml of water. Test results are shown in Table I. Example 1e is a comparison prepared without a binder.

Table I. Test Results for Example 1

| | 1a | 1b | 1c | 1d | 1e |
|---|---|---|---|---|---|
| Binder | I | I | I | II | -- |
| Quantity of binder (ml) | 10 | 15 | 20 | 10 | -- |
| Test method | | | | | |
| P1 | none | none | none | none | none |
| P2 | none | none | none | none | none |
| P3 | none | none | none | none | none |
| P4 | none | none | none | none | none |
| P5 | none | none | none | none | none |
| B1: | | | | | |
| Water | none | none | none | none | moderate |
| $H_2O$/ethanol | none | none | none | none | extensive |
| Soap | none | none | none | none | extensive |
| Milk | v. sl. | none | none | none | extensive |
| B2: | | | | | |
| Water | none | none | none | none | none |
| $H_2O$/ethanol | none | none | none | none | none |
| Soap | none | none | none | none | none |
| Milk | v. sl. | | none | v. sl. | |
| B3: | | | | | |
| Water | none | none | | none | |
| $H_2O$/ethanol | none | none | | none | |
| Soap | none | none | | none | |
| Milk | v. sl. | none | | v. sl. | |
| F1: | | | | | |
| Hand proofer | good | | | | |
| Felt pen | good | | | | |

Example 2 Printing ink based on C.I. Pigment Violet 19.

A printing ink was prepared by mixing the quantities of binders indicated in Table II with 10 g of Pigment Violet 19 Dispersion (a 20% dispersion of pigment in water) and 90 ml of water. Test results are shown in Table II. Example 2e is a comparison prepared without a binder.

Table II. Test Results for Example 2

| | 2a | 2b | 2c | 2d | 2e |
|---|---|---|---|---|---|
| Binder | I | I | I | II | -- |
| Quantity of binder (ml) | 10 | 15 | 20 | 10 | -- |
| Test method | | | | | |
| P1: | | | | | |
| Precip. | none | none | none | none | none |
| Sepn. | moderate | moderate | moderate | moderate | moderate |
| P2: | | | | | |
| Precip. | none | none | none | none | none |
| Sepn. | extensive | extensive | extensive | extensive | extensive |
| P3 | none | none | none | none | none |
| P4 | none | none | none | none | none |
| P5 | none | none | none | none | none |
| B1: | | | | | |
| Water | none | none | | none | |
| $H_2O$/ethanol | none | none | | none | |
| Soap | none | none | | none | |
| B2: | | | | | |
| Water | none | none | | | |
| $H_2O$/ethanol | none | none | | none | |
| Soap | none | none | | none | |
| Milk | v. sl. | none | | v. sl. | |
| B3: | | | | | |
| Water | none | | | | |
| $H_2O$/ethanol | none | | | | |
| Soap | v. sl. | | | | |

Example 3 Printing ink based on C.I. Pigment Yellow 14.

A printing ink was prepared by mixing the quantities of binders indicated in Table III with 10 ml of Pigment Yellow 14 Dispersion (a 20% dispersion of pigment in water) and 90 ml of water. Test results are shown in Table III.

Table III. Test Results for Example 3

| | 3a | 3b | 3c |
|---|---|---|---|
| Binder | I | I | II |
| Quantity of binder (ml) | 10 | 20 | 10 |
| Test method | | | |
| P1: | | | |
| Precip. | none | none | none |
| Sepn. | moderate | moderate | moderate |
| P2: | | | |
| Precip. | none | none | none |
| Sepn. | extensive | extensive | extensive |
| P3 | none | none | none |
| P4 | none | none | none |
| P5 | none | none | none |
| B1: | | | |
| Water | none | none | none |
| $H_2O$/ethanol | none | none | none |
| Soap | none | none | none |
| B2: | | | |
| Water | none | none | |
| Lard oil | none | none | none |
| $H_2O$/ethanol | none | none | none |
| Soap | none | none | none |
| Milk | v. sl. | none | v. sl. |
| B3: | | | |
| Water | none | none | none |
| Lard oil | none | none | none |
| $H_2O$/ethanol | none | none | none |
| Soap | none | none | none |

Example 4 Printing ink based on C.I. Direct Red 236.

A printing ink was prepared by mixing the quantities of binders indicated in Table IV with 15 ml of Direct Red 236 Liquid and 90 ml of water. Test results are shown in Table IV. Example 4e is a comparison prepared without a binder.

Table IV. Test Results for Example 4

| | 4a | 4b | 4c | 4d | 4e |
|---|---|---|---|---|---|
| Binder | I | I | I | II | -- |
| Quantity of binder (ml) | 10 | 15 | 20 | 10 | -- |
| Test method | | | | | |
| P1 | none | none | v. sl. | none | none |
| P2 | none | none | none | none | none |
| P3 | none | none | none | none | |
| P5 | none | none | v. sl. | none | |
| B1: | | | | | |
| Water | none | none | | none | extensive |
| $H_2O$/ethanol | none | none | | none | |
| Soap | none | none | | none | |
| B2: | | | | | |
| Water | none | | | none | extensive |
| $H_2O$/ethanol | none | | | none | |
| Soap | none | | | none | |
| B3: | | | | | |
| Water | none | none | | none | |
| $H_2O$/ethanol | none | none | | none | |
| Soap | none | none | | none | |
| Milk | slight | v. sl. | | slight | |
| F1: | | | | | |
| Hand proofer | good | | | | |
| Felt pen | good | | | | |

Example 5 Printing ink based on C.I. Direct Yellow 127.

A printing ink was prepared by mixing the quantities of binders indicated in Table V with 10 ml of Direct Yellow 127 Liquid and 90 ml of water. Test results are shown in Table V.

Table V. Test Results for Example 5

| | 5a | 5b | 5c | 5d |
|---|---|---|---|---|
| Binder | I | I | I | II |
| Quantity of binder (ml) | 10 | 15 | 20 | 10 |
| Test method | | | | |
| P1 | none | none | slight | none |
| P2 | none | none | none | none |
| P3 | none | none | none | none |
| P5 | none | none | none | none |
| B1: | | | | |
| Water | none | none | | none |
| $H_2O$/ethanol | slight | none | | v. sl. |
| Soap | slight | none | | none |
| B2: | | | | |
| Water | none | none | | none |
| $H_2O$/ethanol | slight | none | | slight |
| Soap | slight | v. sl. | | slight |
| Milk | moderate | moderate | | moderate |
| B3: | | | | |
| Water | none | | | none |
| $H_2O$/ethanol | none | | | none |
| Soap | slight | | | slight |
| F1: | | | | |
| Hand proofer | good | | | |
| Felt pen | good | | | |

Examples 6-9 Machine application.

Example 6

A printing ink was prepared by mixing 10 parts of binder I with 12 parts of C.I. Pigment Yellow 14 and 100 parts of water. The printing ink was applied to wrapping tissue using an off machine padder. Test results are shown in Table VI.

Table VI. Test Results for Example 6

| Test method | Results |
|---|---|
| B4: | |
| Water | none |
| $H_2O$/ethanol | none |
| F2 | good |

Example 7

A printing ink was prepared by mixing 15 parts of binder I with 15 parts of C.I. Pigment Yellow 14, 0.4 parts of C.I. Direct Blue 86, and 100 parts of water. The printing ink was applied to wrapping tissue using an off machine padder. Test results are shown in Table VII.

Table VII. Test Results for Example 7

| Test method | Results |
|---|---|
| B4: | |
| Water | none |
| $H_2O$/ethanol | none |
| F2 | good |

Example 8

A printing ink was prepared by mixing 100 parts of binder I with 180 parts of C.I. Direct Blue 199, 24 parts of C.I. Direct Red 236, and 2240 parts of water. The ink was printed on white paper towels using a Kidder flexo press. Test results are shown in Table VIII.

Table VIII. Test Results for Example 8

| Test method | Results |
|---|---|
| B5: | |
| Water | none |
| $H_2O$/ethanol | none |
| F2 | good |

Example 9

A printing ink was prepared by mixing 200 parts of binder I with 140 parts of C.I. Direct Yellow 127 Liquid and 2240 parts of water. The ink was printed on white paper towels using a Kidder flexo press. Test results are shown in Table IX.

Table IX. Test Results for Example 9

| Test method | Results |
|---|---|
| B5: | |
| Water | none |
| $H_2O$/ethanol | none |
| F2 | good |

## Claims

1. A composition useful as a binder in paper or textile color formulations or printing inks comprising
   (a) one or more polyalkylene imines (preferably a polyethylenimine);
   (b) one or more alkanolamines (preferably ethanolamine); and
   (c) one or more polyols (preferably a glycol);
   optionally in the presence of
   (d) water.

2. A composition according to Claim 1 comprising
   (a) 10 to 30 parts by weight of one or more polyalkylene imines (preferably a polyethylenimine);
   (b) 20 to 40 parts by weight of one or more alkanolamines (preferably ethanolamine); and
   (c) 10 to 60 parts by weight of one or more polyols (preferably a glycol);
   in the presence of
   (d) up to 40 parts by weight of water.

3. A composition according to Claim 2 wherein the polyol is an aliphatic glycol (preferably ethylene glycol or propylene glycol), a polyalkylene glycol, glycerin, or a mixture thereof.

4. A composition according to Claim 2 comprising
   (a) 15 to 20 parts by weight of a polyethylenimine;
   (b) 30 to 35 parts by weight of ethanolamine; and
   (c) 10 to 60 parts by weight of one or more aliphatic glycols in the presence of
   (d) up to 10 parts by weight of water.

5. A paper or textile color formulation having improved resistance to bleeding comprising
   (a) 5 to 40 (preferably 10 to 30) percent by weight of a composition according to Claim 2 as binder;
   (b) 1 to 60 (preferably 1 to 40) percent by weight of a dye and/or pigment;
   (c) up to 94 percent by weight water; and
   (d) optionally, additives,
   the amount of components (a), (b), (c), and (d) totaling 100 percent by weight.

6. A printing ink having improved resistance to bleeding and feathering comprising
   (a) 5 to 40 (preferably 10 to 30) percent by weight of a composition according to Claim 2 as binder;
   (b) 1 to 60 (preferably 1 to 40) percent by weight of a dye and/or pigment;
   (c) up to 94 percent by weight water; and
   (d) optionally, additives,
   the amount of components (a), (b), (c), and (d) totaling 100 percent by weight.

7. Use of a colour formulation according to claim 5 for dyeing a cellulose-based substrate.

8. Use of a printing ink according to claim 6 for printing on a cellulose-based substrate.

## Patentansprüche

1. Als Bindemittel für Formulierungen zum Färben von Papier oder Textilien oder für Druckfarben nützliche Zusammensetzung, umfassend
   (a) ein oder mehrere Polyalkylenimine (vorzugsweise ein Polyethylenimin);
   (b) ein oder mehrere Alkanolamine (vorzugsweise Ethanolamin); und
   (c) ein oder mehrere Polyole (vorzugsweise ein Glycol);
   gegebenenfalls in Gegenwart von
   (d) Wasser.

2. Zusammensetzung nach Anspruch 1, umfassend
   (a) 10 bis 30 Gew.-Teile eines oder mehrerer Polyalkylenimine (vorzugsweise eines Polyethylenimins);
   (b) 20 bis 40 Gew.-Teile eines oder mehrerer Alkanolamine (vorzugsweise Ethanolamin); und
   (c) 10 bis 60 Gew.-Teile eines oder mehrerer Polyole (vorzugsweise eines Glycols);
   in Gegenwart von
   (d) bis zu 40 Gew.-Teilen Wasser.

3. Zusammensetzung nach Anspruch 2, worin das Polyol ein aliphatisches Glycol (vorzugsweise Ethylenglycol oder Propylenglycol), ein Polyalkylenglycol, Glycerin oder ein Gemisch aus diesen ist.

4. Zusammensetzung nach Anspruch 2, umfassend
   (a) 15 bis 20 Gew.-Teile eines Polyethylenimins;
   (b) 30 bis 35 Gew.-Teile Ethanolamin; und
   (c) 10 bis 60 Gew.-Teile eines oder mehrerer aliphatischer Glycole
   in Gegenwart von
   (d) bis zu 10 Gew.-Teilen Wasser.

5. Formulierung zum Färben von Papier oder Textilien mit verbesserter Beständigkeit gegen Ausbluten, umfassend
   (a) 5 bis 40 Gew.-% (vorzugsweise 10 bis 30 Gew.-%) einer Zusammensetzung nach Anspruch 2 als Bindemittel;
   (b) 1 bis 60 Gew.-% (vorzugsweise 1 bis 40 Gew.-%) eines Farbstoffs und/oder Pigments;
   (c) bis zu 94 Gew.-% Wasser; und
   (d) gegebenenfalls Additive,
   wobei die Mengen der Komponenten (a), (b), (c) und (d) insgesamt 100 Gew.-% ergeben.

6. Druckfarbe mit verbesserter Beständigkeit gegen Ausbluten und Auslaufen, umfassend
   (a) 5 bis 40 Gew.-% (vorzugsweise 10 bis 30 Gew.-%) einer Zusammensetzung nach Anspruch 2 als Bindemittel;
   (b) 1 bis 60 Gew.-% (vorzugsweise 1 bis 40 Gew.-%) eines Farbstoffs und/oder Pigments;
   (c) bis zu 94 Gew.-% Wasser; und
   (d) gegebenenfalls Additive,
   wobei die Mengen der Komponenten (a), (b), (c) und (d) insgesamt 100 Gew.-% ergeben.

7. Verwendung einer Formulierung zum Färben nach Anspruch 5 zum Färben eines Substrats auf Cellulose-Basis.

8. Verwendung einer Druckfarbe nach Anspruch 6 zum Drucken auf ein Substrat auf Cellulose-Basis.

## Revendications

1. Composition utile comme liant dans des formulations colorantes ou des encres d'impression pour du papier ou pour du textile, la composition comprenant :
   (a) une ou plusieurs polyalkylène-imines (de préférence une polyéthylène-imine);
   (b) une ou plusieurs alcanolamines (de préférence l'éthanolamine); et
   (c) un ou plusieurs polyols (de préférence un glycol);
   éventuellement en présence

(d) d'eau.

**2.** Composition selon la revendication 1, comprenant :
(a) 10 à 30 parties en poids d'une ou plusieurs polyalkylène-imines (de préférence une polyéthylène-imine);
(b) 20 à 40 parties en poids d'une ou plusieurs alcanolamine (de préférence l'éthanolamine) ; et
(c) 10 à 60 parties en poids d'un ou plusieurs polyols (de préférence un glycol);
en présence de
(d) jusqu'à un maximum de 40 parties en poids d'eau.

**3.** Composition selon la revendication 2, dans laquelle le polyol est un glycol aliphatique (de préférence l'éthylèneglycol ou le propylèneglycol), un polyalkylèneglycol, le glycérol ou un de leurs mélanges.

**4.** Composition selon la revendication 2, comprenant :
(a) 14 à 20 parties en poids d'une polyéthylène-imine;
(b) 30 à 35 parties en poids d'éthanolamine ; et
(c) 10 à 60 parties en poids d'un ou plusieurs glycols aliphatiques,
en présence
(d) d'une quantité allant jusqu'à un maximum de 10 parties en poids d'eau.

**5.** Formulation colorante pour papier ou textile, ayant une meilleure résistance à du dégorgement ou du déteintage et comprenant :
(a) 5 à 40 (de préférence 10 à 30) % en poids d'une composition selon la revendication 2, à titre de liant;
(b) 1 à 60 (de préférence 1 à 40) % en poids d'un colorant et/ou d'un pigment;
(c) jusqu'à 94 % en poids d'eau ; et
(d) éventuellement des additifs,
la quantité des constituants (a), (b), (c) et (d) faisant au total 100 % en poids.

**6.** Encre d'impression ayant une meilleure résistance à du déteintage ou du dégorgement et à de la bavure, cette encre comprenant :
(a) 5 à 40 (de préférence 10 à 30) % en poids d'une composition selon la revendication 2, à titre de liant;
(b) 1 à 60 (de préférence 1 à 40) % en poids d'un colorant et/ou d'un pigment;
(c) jusqu'à 94 % en poids d'eau ; et
(d) éventuellement des additifs,
la quantité des constituants (a), (b), (c) et (d) faisant au total 100 % en poids.

**7.** Utilisation d'une formulation colorante selon la revendication 5, pour teindre un substrat à base de cellulose.

**8.** Utilisation d'une encre d'impression selon la revendication 6, pour effectuer une impression sur un substrat à base de cellulose.